# EUROPEAN PATENT APPLICATION

(11) **EP 2 405 558 A1**
(43) Date of publication of application: **11.01.2012**
(21) Application number: 10168402.5
(22) Date of filing: 05.07.2010
(51) Int. Cl.: H02K 3/40, H02K 3/14

(54) **Stator Bar**

(71) Applicant: Alstom Technology Ltd, 5400 Baden (CH)
(72) Inventor: Safari Zadeh, Hossein, CH-5504 Othmarsingen (CH); Novosel, Damir, CH-5103 Möriken (CH)

(57) **Abstract**

The stator bar (1) comprises and interwoven conductor (2) having an insulation (4) wrapped around it. The insulation (4) comprises at least an inner layer (5) and an outer layer (6), a semi-conductive layer (7) being provided between the inner and the outer layer (5, 6).

## Description

### TECHNICAL FIELD

The present invention relates to a stator bar. In particular the present invention refers to stator bars of rotating electric machines, such as electric generators or motors.

### BACKGROUND OF THE INVENTION

Stator bars comprise an interwoven conductor (green bar or Roebel conductor) made of a plurality of strands, transposed and connected each other.

The interwoven conductor has a main insulation wrapped around it.

The main insulation is typically made of a mica tape wrapped around the interwoven conductor and impregnated with a resin that is then cured.

During operation, the insulation has to withstand an AC electric field stress that is very high in zones close or very close to the interwoven conductor and decreases towards the outer surface of the insulation.

In actual embodiments of traditional stator bars it was observed that insulation zones farthest from the interwoven conductor have a very low electric field stress and, thus, the insulation is not fully utilised (underused) (i.e. it could withstand much higher electric field stress).

For this reason the stator bars, that must be designed with an insulation able to cope with the actual electric field stress, have typically a large size and consequently high costs.

In addition, the main insulation can have defects, such as voids, cracks delaminations, insufficient resin impregnation, resin accumulation at tape overlaps, wrinkled or damaged mica layers; these defects may be already present at the end of the manufacturing process and/or may be generated during the stator bar operation.

During operation these defects may cause insulation over stressing and partial discharges.

Electric stress within the insulation may also be caused by the properties of the material around the insulation, i.e. change of the electric properties of the material around the stator bar insulation may cause over stressing of the insulation and, also in this case, partial discharges.

In particular, an abrupt change of the electric properties around the stator bar insulation occurs at the zone of the stator bar immediately outside of the stator slot (i.e. the slots of a generator or motor core wherein the stator bars are housed).

Partial discharges (whatever their cause is) propagate over the insulation, causing its degradation by producing changes in the insulating qualities, often leading to further partial discharge activity, aging effects, and overall deterioration of the insulating layers, with the result that breakdown may eventually occur.

### SUMMARY OF THE INVENTION

The technical aim of the present invention therefore includes providing a stator bar addressing the aforementioned problems of the known art.

Within the scope of this technical aim, one of the aspects of the invention is to provide a stator bar that is smaller and cheaper than traditional corresponding stator bars.

Another aspect of the invention is to provide a stator bar that prevents or hinders partial discharges from propagating within the insulation.

The technical aim, together with these and further aspects, are attained according to the invention by providing a stator bar in accordance with the accompanying claims.

Advantageously, the stator bar in embodiments of the invention may have a smaller insulation thickness than similar traditional stator bars or may have an increased nominal operating voltage than traditional stator bars having substantially the same insulation thickness.

### BRIEF DESCRIPTION OF THE DRAWINGS

Further characteristics and advantages of the invention will be more apparent from the description of a preferred but non-exclusive embodiment of the stator bar illustrated by way of non-limiting example in the accompanying drawings, in which:
Figure 1 is a schematic cross section of a stator bar in an embodiment of the invention; and
Figure 2 shows the run of the electric field stress in the insulation of a traditional stator bar and a stator bar in an embodiment of the invention.

### DETAILED DESCRIPTION OF EMBODIMENTS OF THE INVENTION

With reference to the figures, these show a stator bar 1 comprising and interwoven conductor 2 made of transposed strands 3, having an insulation 4 wrapped around it.

The insulation 4 comprises two or more layers 5, 6; in the attached drawings for sake of simplicity only two layers are shown, it is anyhow clear that the number of the layers may also be larger, i.e. the layers may also be three or more according to the dimensions of the stator bar 1 and the operating voltage.

Between the inner layer 5 and the outer layer 6, a semi-conductive layer 7 is provided.

The semi-conductive layer 7 is substantially equipotential but, at the same time, it avoids or at least hinders eddy currents.

The semi-conductive layer 7 comprises silicon carbide (SiC, also known as carborundum) and/or carbon and/or mixtures containing at least one of them.

In particular, in a first embodiment, the semi-conductive layer 7 comprises a tape (with silicon carbide and/or carbon and/or mixtures containing at least one of them) wrapped around the inner layer.

In a second, different embodiment, the semi-conductive layer 7 comprises a varnish or paste spread on the inner layer 5.

The layers 5, 6 may have the same thickness (as shown in the drawings) but, in different embodiments, their thickness may also differ.

In particular, the inner layer 5 comprises a mica tape wrapped around the interwoven conductor 2 and the outer layer 6 comprises a mica tape wrapped around the semi-conductive layer 7.

As usual in the art, these tapes are impregnated with a resin that is then cured to form the insulation. For example a first mica tape could be wrapped around the interwoven conductor 2, then it may be impregnated and cured to form the inner layer 5. Afterwards the layer 7 may be applied on the layer 5 and afterwards a second mica tape (the same as or different from the first mica tape) may be wrapped around the layer 7, may be impregnated and the resin cured to form the layer 7. Alternatively one single curing phase after impregnation of the second mica tape could be provided. Naturally also different processes are possible such as, for example, a resin rich process.

During operation, the semi-conductive layer 7 allows grading of the voltage within the whole insulation, such that a better use of the same insulation is done.

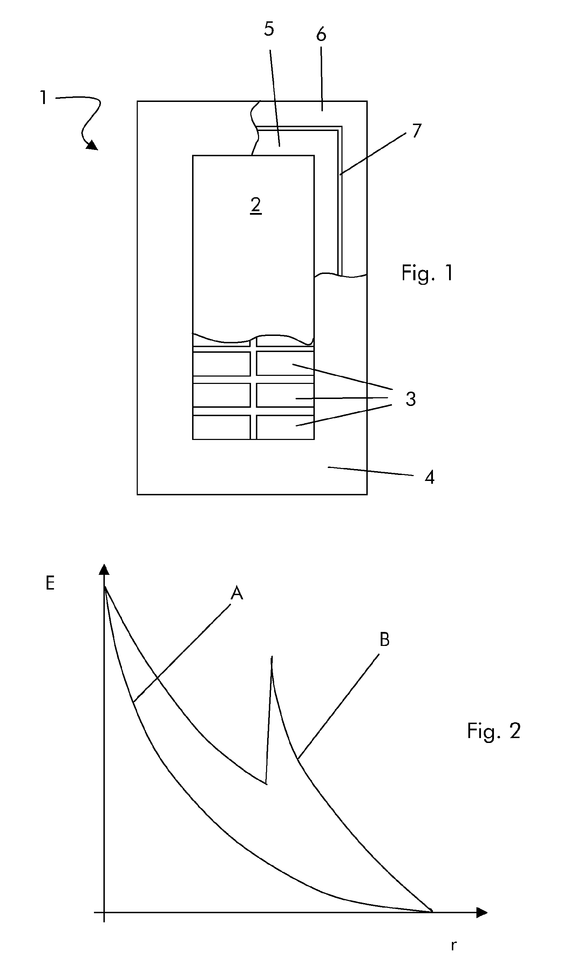

In particular figure 2 shows the electric field stress E within the insulation at a corner of a stator bar (i.e. at the position where the electric field stress is larger); r identifies distance from the interwoven conductor 2, curve A the electric field stress E in a traditional stator bar and curve B the electric field stress E in the stator bar in an embodiment of the invention.

From curve A it can be ascertained that in traditional stator bars the electric field stress is very high at the zone of the insulation close to the interwoven conductor 2, whereas in the rest of the insulation it is quite low; this causes a bad use of the insulation, since the most of it has to cope with a very low electric field stress E, much lower than the electric field stress theoretically applicable.

This causes that, since the run of the electric field stress within the insulation 4 depends on the materials, etc, in order to withstand the high electric field stress at its zone close to the interwoven conductor 2, the thickness of the insulation 4 must have minimum (large) dimensions that cannot be reduced below a certain limit.

In contrast, curve B shows that because of the semi-conductive layer 7, the insulation is much better used, i.e. the electric field stress within the insulation 4 is more uniform and, in particular, in the layer 6 apart from the interwoven conductor 2 it is much higher than in the traditional insulation without the layer 7.

Since also in this case the run of the electric field stress within the insulation depends on the materials, configuration of the conductive layer, etc, and since there is no high electric field stress peak at the zone close to the interwoven conductor 2 (the electric field stress is more uniform within the insulation 4), in the stator bar in the embodiments of the invention the minimum dimensions of the insulation 4 may be much smaller than in traditional stator bars; in other words the insulation 4 can be manufactured with a smaller thickness than in traditional stator bar, allowing costs, material and manufacturing time to be saved.

In addition, in case partial discharges are generated in the inner layer 5 and they start to propagate within the insulation 4, when they reach the semi-conductive layer 7 they are prevented from further propagating.

Naturally the features described may be independently provided from one another.

In practice the materials used and the dimensions can be chosen at will according to requirements and to the state of the art.

### REFERENCE NUMBERS

- 1: stator bar
- 2: interwoven conductor
- 3: transposed strands
- 4: insulation
- 5: inner layer
- 6: outer layer
- 7: semi-conductive layer
- A: run of E in traditional stator bars
- B: run of E in stator bars in embodiments of the invention
- E: electric field stress
- r: distance from the interwoven conductor

## Claims

1. Stator bar (1) comprising and interwoven conductor (2) having an insulation (4) wrapped around it, **characterised in that** the insulation (4) comprises at least an inner layer (5) and an outer layer (6), a semi-conductive layer (7) being provided between the inner and the outer layer (5, 6).

2. Stator bar (1) as claimed in claim 1, **characterised in that** the semi-conductive layer (7) comprises silicon carbide and/or carbon and/or mixtures containing at least one of them.

3. Stator bar (1) as claimed in claim 2, **characterised in that** the semi-conductive layer (7) comprises a tape wrapped around the inner layer (5).

4. Stator bar (1) as claimed in claim 2, **characterised in that** the semi-conductive layer (7) comprises a varnish or paste spread on the inner layer (5).

5. Stator bar (1) as claimed in claim 1, **characterised in that** the inner layer (5) comprises a mica tape wrapper around the interwoven conductor (2) and the outer layer (6) comprises a mica tape wrapped around the semi-conductive layer (7).
